# EUROPÄISCHE PATENTSCHRIFT

(11) **EP 2 228 303 B1**
(45) Veröffentlichungstag und Bekanntmachung des Hinweises auf die Patenterteilung: **15.05.2013**
(21) Anmeldenummer: 10155896.3
(22) Anmeldetag: 09.03.2010
(51) Int. Cl.: B64D 9/00

(54) **Rollenbahn**
Roller conveyer
Bande de rouleaux

(30) Priorität: 10.03.2009 DE 102009012427
(43) Veröffentlichungstag der Anmeldung: 15.09.2010
(73) Patentinhaber: Telair International GmbH, 83714 Miesbach (DE)
(72) Erfinder: Huber, Thomas, 83727, Schliersee (DE); Holzner, Richard, 83071, Stephanskirchen (DE)
(74) Vertreter: Bohnenberger, Johannes

(56) Entgegenhaltungen:
- EP-A1- 1 935 782
- DE-A1- 19 501 562
- DE-B3-102004 016 219

## Beschreibung

Die Erfindung betrifft eine Rollenbahn eines Flugzeugladedecks nach dem Oberbegriff des Patentanspruches 1.

Ein Ladedeck eines Flugzeugs weist üblicherweise Rollenbahnen auf, auf denen Frachtstücke, insbesondere Container insbesondere in Längsrichtung des Flugzeugs verschoben werden können. Auf diesen Rollenbahnen stehen die Container dann auch während des Fluges, wobei üblicherweise Riegel vorgesehen sind, welche mit (genormten) Abschnitten der Container in Eingriff kommen. Derartige Rollenbahnen sind beispielsweise aus der DE 10 2004 016 219 B3 oder DE 10 2006 060 785 A1 bekannt.

Ein wesentliches Problem bei derartigen Rollenbahnen besteht darin, dass einerseits eine hohe Stabilität und Robustheit gegeben sein muss, da der Betrieb unter oftmals schwierigen Bedingungen stattfindet und dennoch unterbrechungsfrei laufen muss. Andererseits stellt das Gewicht derartiger Rollenbahnen ein nicht unerhebliches Problem dar. Schließlich liegt auch ein Problem darin, dass auch eine hohe Variabilität der Beladungsmöglichkeiten gegeben sein muss. Um diese zu gewährleisten, müssen die Rollenbahnen und zwar insbesondere die mittig im Flugzeugladeraum montierten Rollenbahnen bedarfsweise mittig unter einem Container liegend überfahrbar sein und bei anderen Containermaßen nur randseitig unter einem Container diesen unterstützend funktionsfähig sein. Dokument DE 19501562, das alle Merkmale das Oberbegriffs das Anspruchs 1 aufweist, wird als nächstliegender Stand der Technik angesehen.

Der Erfindung liegt die Aufgabe zu Grunde, eine Rollenbahn der eingangs genannten Art dahin gehend aufzuzeigen, dass bei hoher Stabilität und geringem Gewicht eine große Variabilität gewährleistet ist.

Diese Aufgabe wird durch eine Rollenbahn nach Anspruch 1 gelöst.

Insbesondere wird diese Aufgabe durch eine Rollenbahn eines Flugzeugladedecks gelöst, die Rollen zum Transport von Frachtstücken, insbesondere Containern und einen Kanal mit Seitenwänden und einem Boden aufweist zur Montage von Riegelelementen zum Halten der Frachtstücke. Die Seitenwände weisen Verstärkungsabschnitte mit Ausnehmungen auf, in denen die Rollen derart montiert sind, dass Achsen, auf denen die Rollen drehbar gelagert sind, in jeweils einer Seitenwand befestigt sind.

Dadurch, dass die Seitenwände die genannten Verstärkungsabschnitte aufweisen und die Rollen in den dort vorgesehenen Ausnehmungen montiert sind, ist eine extrem hohe Stabilität gewährleistet. Andererseits können durch die weit am Rand liegenden Montageorte der Rolle Container auch mit ihren Randabschnitten unterstützt werden, wie dies z.B. in der DE 10 2004 016 219 B3 der Fall ist.

Vorzugsweise sind die Seitenwände an ihren Oberrändern durch Deckflächen mit auskragenden Außenrändern abgeschlossen. Dadurch werden eine erhöhte Stabilität und Biegesteifigkeit in einer Richtung quer zur Rollenbahn erzielt. Weiterhin wird dadurch gewährleistet, dass die Rollenbahnen auch begehbar sind.

Die Deckflächen sind vorzugsweise bündig mit Innenflächen der Seitenwände abschließend ausgebildet. Damit ist der Kanal der Rollenbahn zur Montage anderer Funktionselemente, z.B. von Rollenantriebseinheiten oder Riegeln frei zugänglich.

Die Außenränder sind im Wesentlichen korrespondierend zu Konturen der Seitenwände verlaufend ausgebildet. Es ist also die Breite der auskragenden Deckflächen über die Länge der Rollenbahn im Wesentlichen konstant, so dass die notwendige Stabilität an allen Stellen gewährleistet ist, andererseits aber überflüssiges Gewicht vermieden wird.

Zwischen den Seitenwänden sind Riegel in unmittelbarer Nähe der Rollen montiert. Durch diese Nähe der Riegel zu den Rollen ist gewährleistet, dass ein mittels des Riegels festgelegter Container optimal unterstützt wird und ein Freikommen des Riegels somit nicht möglich ist. Hierbei sind die Ausnehmungen zu den Riegeln hin einseitig offen, so dass ein maximaler Raum geschaffen wird, um den Riegel zum Überrollen umlegen zu können.

Nachfolgend wird die Erfindung anhand eines Ausführungsbeispiels näher erläutert, das anhand von Abbildungen beschrieben wird. Hierbei zeigen:
- Fig. 1 eine perspektivische Ansicht von zwei aneinander grenzenden Rollenbahnen,
- Fig. 2 eine Seitenansicht der Rollenbahn nach Fig. 1,
- Fig. 3 eine Draufsicht auf die Rollenbahn nach Fig. 2 und
- Fig. 4 eine vergrößerte Darstellung eines Teils der Rollenbahn nach Fig. 1.

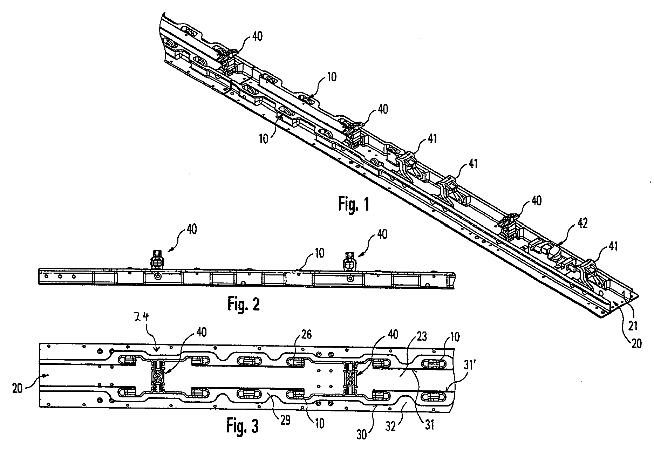

In der nachfolgenden Beschreibung werden für gleiche und gleich wirkende Teile dieselben Bezugsziffern verwendet. Darüber hinaus sind die Figuren 1, 2, 3 und 4 gemeinsam zu betrachten.

Wie aus den Abbildungen hervorgeht, umfasst die hier gezeigte Rollenbahn einen Kanal 20, der von Seitenwänden 21, 22 und einem Boden 23 gebildet wird. Der Boden 23 setzt sich nach außen hin in eine Montageplatte 32 fort, die zu beiden Seiten der Rollenbahn verläuft.

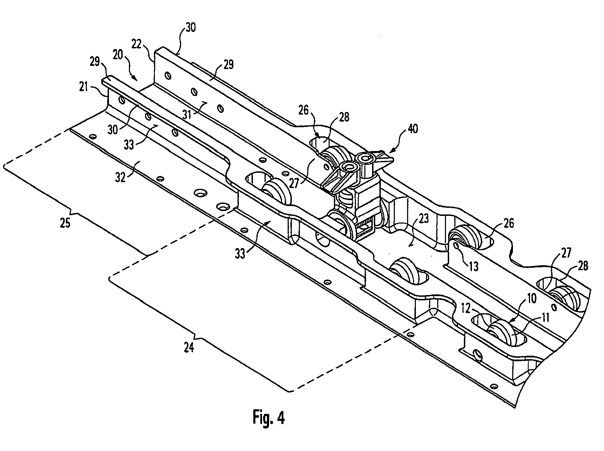

Die Seitenwände 21, 22 weisen Verstärkungsabschnitte 24 auf, welche gegenüber Normalabschnitten 25 hervorspringende Außenwände 33 aufweisen, während Innenflächen 31, 31' (siehe Fig. 3) im Wesentlichen durchgehend verlaufen. In diesen Verstärkungsabschnitten 24 sind Ausnehmungen 26 vorgesehen, in welchen Rollen 10 montiert sind. Hierbei sind die Rollen 10 auf Achsen 13 drehbar gelagert, welche mit ihren Enden in einem Innenabschnitt 27 und einem Außenabschnitt 28 (siehe Fig. 4) der Seitenwände 21, 22 befestigt sind. Die Rollen 10 weisen Tragbereiche 11 auf, welche zur Achse 13 parallel verlaufen und Anfahrbereiche 12, welche sich von den Tragbereichen 11 ausgehend nach außen verjüngen, so dass ein seitliches Anfahren der Rollen 10 durch einen Container diesen Container auf den Tragbereich 11 anhebt.

Die Seitenwände 21, 22 gehen an ihren Oberrändern in Deckflächen 29 über, welche vom Kanal 20 gesehen nach außen vorspringen und weisen Außenränder 30 auf, die im Wesentlichen der Kontur der Seitenwände 21, 22 folgen. Im Bereich der Verstärkungsabschnitte 24 ragen also die Außenränder 30 weiter aus als im Bereich der Normalabschnitte 25.

Zusätzlich zu den Rollen 10 sind im Kanal 20 y-z-Riegel 40 und x-z-Riegel 41 montiert. Der in Fig. 4 gezeigte y-z-Riegel 40 ist in einem Bereich des Kanals 20 montiert, in welchem die Innenflächen 31 der Seitenwände 21, 22 einen vergrößerten Platz lassen. Die Montage dieses Riegels erfolgt hierbei so, dass dessen Achse direkt in den Seitenwänden 21, 22 gelagert ist. Bei dem in Fig. 4 gezeigten Beispiel sind weiterhin die Rollen 10 so nah wie möglich am Riegel 40 montiert, so dass eine Unterstützung des durch den Riegel 40 gehaltenen Containers direkt im Bereich des Riegels 40 gewährleistet ist.

Weiterhin ist in Fig. 1 mit der Bezugsziffer 42 ein so genannter Splitter vorgesehen, der als Führungselement wirkt, um bei einer im Laderaum mittig angeordneten Rollenbahn zwei nebeneinander laufende Container derart auseinander zu drücken, dass sie von dem y-z-Riegel nach Positionierung korrekt gehalten werden können.

Die hier gezeigte Rollenbahn wird vorzugsweise aus einem Strangpressprofil herausgefräst. Andere Fertigungsmethoden sind natürlich auch möglich.

### Bezugszeichenliste

| | |
|---|---|
| 10 | Rolle |
| 11 | Tragbereich |
| 12 | Anfahrbereich |
| 13 | Achse |
| 20 | Kanal |
| 21 | Seitenwand |
| 22 | Seitenwand |
| 23 | Boden |
| 24 | Verstärkungsabschnitt |
| 25 | Normalabschnitt |
| 26 | Ausnehmung |
| 27 | Innenabschnitt |
| 28 | Außenabschnitt |
| 29 | Deckfläche |
| 30 | Außenwand |
| 31 | Innenfläche |
| 32 | Montageplatte |
| 33 | Außenwand |
| 40 | γ-z-Riegel |
| 41 | x-z-Riegel |
| 42 | Führungselement/Splitter |

## Patentansprüche

1. Rollenbahn eines Flugzeugladedecks, mit Rollen (10) zum Transport von Frachtstücken, insbesondere Containern und einem Kanal (20) mit Seitenwänden (21, 22) und einem Boden (23) zur Montage von Riegelelementen (40, 41) oder anderen Funktionselementen (42) zum Halten, Führen und Transportieren von Frachtstücken,
wobei
die Seitenwände (21, 22) Verstärkungsabschnitte (24) mit Ausnehmungen (26) aufweisen, in denen die Rollen (10) derart montiert sind, dass Achsen (13), auf denen die Rollen (10) drehbar gelagert sind, in jeweils einer Seitenwand (21, 22) befestigbar sind, wobei
zwischen den Seitenwänden (21, 22) Riegel (40, 41) in unmittelbarer Nähe der Rollen (10) montiert sind, **dadurch gekennzeichnet, dass**
die den Riegeln (40) benachbarten Ausnehmungen (26) zu den Riegeln (40) hin innenseitig offen sind.

2. Rollenbahn nach Anspruch 1,
**dadurch gekennzeichnet, dass**
die Seitenwände (21, 22) an ihren Oberrändern durch Deckflächen (29) mit auskragenden Außenrändern (30) abgeschlossen sind.

3. Rollenbahn nach einem der vorhergehenden Ansprüche, insbesondere nach Anspruch 2,
**dadurch gekennzeichnet, dass**
die Deckflächen (29) bündig mit Innenflächen (31) der Seitenwände (21, 22) abschließen.

4. Rollenbahn nach einem der vorhergehenden Ansprüche, insbesondere nach einem der Ansprüche 2 oder 3,
**dadurch gekennzeichnet, dass**
die Außenränder (30) im Wesentlichen korrespondierend zu Konturen der Seitenwände (21, 22) verlaufend ausgebildet sind.

## Claims

1. Roller conveyor of an aircraft loading deck, having rollers (10) for transporting items of cargo, especially containers, and a channel (20) which has side walls (21, 22) and a base (23) for mounting locking elements (40, 41) or other functional elements (42) for holding, guiding and transporting items of cargo,
wherein
the side walls (21, 22) have reinforcing portions (24) having recesses (26) in which the rollers (10) are so mounted that axles (13) on which the rollers (10) are rotatably mounted are each arranged to be fixed in a side wall (21, 22), wherein
locking parts (40, 41) are mounted between the side walls (21, 22), in the immediate vicinity of the rollers (10), **characterised in that**
the recesses (26) adjacent to the locking parts (40) are open on the inside towards the locking parts (40).

2. Roller conveyor according to claim 1,
**characterised in that**
the side walls (21, 22) are terminated, at their upper edges, by capping surfaces (29) having outer edges (30) that project out.

3. Roller conveyor according to one of the preceding claims, especially according to claim 2,
**characterised in that**
the capping surfaces (29) terminate flush with inner surfaces (31) of the side walls (21, 22).

4. Roller conveyor according to one of the preceding claims, especially according to one of claims 2 or 3,
**characterised in that**
the outer edges (30) are constructed so that their course substantially corresponds to contours of the side walls (21, 22).

## Revendications

1. Convoyeur à rouleaux d'un pont de chargement d'avion, avec des rouleaux (10) destinés au transport de pièces de fret, en particulier de conteneurs, et un canal (20) avec des parois latérales (21, 22) et un plancher (23) destinés au montage d'éléments de verrouillage (40, 41) ou d'autres éléments fonctionnels (42) destinés au maintien, au guidage et au transport des pièces de fret,
où
les parois latérales (21, 22) présentent des secteurs de renforcement (24) avec des évidements (26), dans lesquels sont montés les rouleaux (10) de sorte que des axes (13), sur lesquels les rouleaux (10) sont logés rotatifs, peuvent être fixés dans respectivement une paroi latérale (21, 22),
des verrous (40, 41) étant montés entre les parois latérales (21, 22) à proximité immédiate des rouleaux (10), **caractérisé en ce que** les évidements (26) contigus aux verrous (40) sont ouverts côté intérieur vers les verrous (40).

2. Convoyeur à rouleaux selon la revendication 1,
**caractérisé en ce que**
les parois latérales (21, 22) sont terminées au niveau de leurs bords supérieurs par des surfaces formant pont (29) avec des bords extérieurs (30) en porte-à-faux.

3. Convoyeur à rouleaux selon l'une quelconque des revendications précédentes, en particulier selon la revendication 2,
**caractérisé en ce que**
les surfaces formant pont (29) se terminent au ras des surfaces intérieures (31) des parois latérales (21, 22).

4. Convoyeur à rouleaux selon l'une quelconque des revendications précédentes, en particulier selon l'une quelconque des revendications 2 ou 3,
**caractérisé en ce que**
les bords extérieurs (30) sont réalisés d'une manière qui suit essentiellement les contours des parois latérales (21, 22).
